(19) Europäisches Patentamt

European Patent Office

Office européen des brevets

(11) EP 0 795 983 A1

## (12) EUROPÄISCHE PATENTANMELDUNG

(43) Veröffentlichungstag:
17.09.1997 Patentblatt 1997/38

(51) Int. Cl.$^6$: H04L 27/20

(21) Anmeldenummer: 96103814.8

(22) Anmeldetag: 11.03.1996

(84) Benannte Vertragsstaaten:
DE FR GB IT NL

(71) Anmelder: Deutsche ITT Industries GmbH
79108 Freiburg (DE)

(72) Erfinder:
• Temerinac, Miodrag, Prof. Dr.-Ing.
79194 Gundelfingen (DE)
• Witte, Franz-Otto, Dr.
D-79312 Emmendingen (DE)

### (54) Modulator für OQPSK

(57) Übertragungssystem mit einem angepaßten Sender (T) zur Übertragung eines digitalen Signals (sr), das in Symbole (Si) kodiert mittels einer Quadraturmodulation von dem Sender (T) in beliebiger Frequenzlage auf einen Empfänger (R) übertragen ist, wobei eine der beiden Quadratursignal-Komponenten (ki, kq) im Sender vor der Quadraturmodulation um ein Zeitintervall (td) verzögert ist.

FIG. 8

EP 0 795 983 A1

**Beschreibung**

Die Erfindung betrifft ein Übertragungssystem für ein digitales Signal, das in Symbole kodiert ist und mittels einer Quadraturmodulation von einem Sender in beliebiger Frequenzlage auf einen Empfänger übertragen ist, vergl. den Oberbegriff des Anspruchs 1. Daneben betrifft die Erfindung ferner einen an das Übertragungssystem angepaßten Sender und eine angepaßte Filterkombination.

Übertragungssysteme für digitale Signale sind in verschiedenen Ausführungen seit langem bekannt und werden wegen ihrer vorteilhaften Eigenschaften zunehmend auch im Bereich der Übertragung oder Speicherung von Signalen oder Daten des Unterhaltungs- oder Informationsbereiches verwendet. Das Hauptkennzeichen dieser Systeme ist, daß die zu übertragende Information in irgend einer Form seriell als digitalisiertes und kodiertes Signal vorliegt und daß dieses digitale Signal vor der Übertragung oder Speicherung grundsätzlich einer QPSK-Modulation (= Quaternary Phase Shift Keying) unterzogen wird. Danach schließt sich in der Regel noch eine Frequenzumsetzung für den Übertragungskanal oder das hochfrequente Übertragungsband an, die bei einer Speicherung entfällt. Auf der Empfängerseite findet die umgekehrte Signalverarbeitung statt, wodurch das ursptungliche digitale Signal wieder zurückgewonnen wird. Daran schließt sich die weitere Signalverarbeitung im Empfänger an, die hier jedoch nicht von Belang ist. Das übertragene Signal, das den Übertragungskanal durchläuft, ist ein kontinuierliches, analoges Signal, das die digitale Information in irgend einer kodierten Form als Modulation enthält. Wesentlich ist dabei das Vorhandensein von möglichst sicheren Quantisierungsbereichen bei dieser Modulation, um eine möglichst hohe Störsicherheit des Übertragungssystems zu erreichen. Das bereits angegebene QPSK-Modulationsverfahren und seine Varianten vereinen hierfür hohe Übertragungssicherheit und hohe Anpassungsfähigkeit. Die zu übertragenden Signale können dabei von schmalbandigen Meß- oder Tonsignalen bis hin zu breitbandigen Video- oder hochauflösemdem Farbfernsehsignalen reichen. Einige Beispiele für bekannte terrestrische oder satellitenbezogene Übertragungssysteme, die nach diesem Verfahren vorgehen sind: DVB = Digital Video Broadcasting, DAB = Digital Audio Broadcasting, ADR = Astra Radio und World Space Radio. Varianten der genannten QPSK-Modulation sind: BPSK = Binary Phase Shift Keying, QAM = Quadrature Amplitude Modulation oder VSB = Vestigial Side Band Modulation.

Die Quadraturmodulation läßt sich gleichsam als ein Zeiger beschreiben, der mit mit der Trägerfrequenz in einer gedachten Ebene rotiert, die von einer I- und einer dazu senkrecht stehenden Q-Koordinate gebildet wird. Ohne Modulation ist die Rotation konstant und die Phase nimmt konstant zu. Dies definiert eine Bezugsphase, die mit dem zu übertragenden Signal moduliert wird. Bei analogen Signalen ist jeder Phasenwert möglich. Bei digitalen Signalen erfolgt eine Quandtisierung, durch die nur bestimmte Phasenbereiche zulässig und damit unterscheidbar sind, beispielsweise die vier Quadranten. Störungen, die kleiner bleiben als die jeweiligen Quantisierungsgrenzen, haben keine Auswirkungen. Durch die Vorgabe der Trägerfrequenz kann das QPSK-Modulationsverfahren an den zu übertragenden Frequenzbereich des Signals angepaßt werden. Unter Umständen wird auch noch die Zeigerlänge verändert, beispielsweise beim QAM-Verfahren, wodurch eine unabhängige weitere Information übertragen werden kann.

Die konstante oder sich nur in festen Grenzen ändernde Zeigerlänge ist für das QPSK-Übertragungsverfahren von großem Vorteil, weil Regelschwingungen im Sender oder Empfänger bei konstanten Signalpegeln nicht auftreten können. Leider wird die resultierende Zeigerlänge im Sender durch die erforderlichen Impulsformfilter erheblich gestört, so daß die Zeigerlänge bei bestimmten Übergangen von einem Phasenbereich auf den anderen bis auf den Wert Null absinken kann.

Es ist daher Aufgabe der Erfindung, ein Übertragungssystem und ein daran angepaßter Sender für die Übertragung digitaler Signale anzugeben, bei dem die Amplitude des resultierenden Zeigers stabilisiert ist und insbesondere den Nulldurchgangsbereich im Zeigerdiagramm vermeidet.

Die Aufgabe wird nach der Erfindung dadurch gelöst, daß im Sender eine der beiden Quadratursignal-Komponenten vor der Quadraturmodulation um ein Zeitintervall verzögert wird und im Empfänger ein entsprechender Zeitausgleich bei der entsprechenden Quadratursignal-Komponente erfolgt.

Neben der Zeigerlängenstabilisierung besteht ein weiterer Vorteil der Erfindung darin, daß bei einem Verzögerungsintervall von einem Viertel der Symbolperiode, im Empfänger ein äußerst einfaches Demodulations- und Dekodierverfahren durchführbar ist, durch den bei einer rein digitalen Realisierung der Filteraufwand im Empfänger wesentlich reduziert werden kann, indem einfache IIR-Filterstrukturen als Impulsformfilter verwendet werden können.

Die Erfindung und weitere vorteilhafte Ausgestaltungen werden nun anhand der Figuren der Zeichnung näher erläutert:

Fig. 1 zeigt als Blockschaltbild einen üblichen Sender mit Empfänger,
Fig. 2 zeigt die Parallelisierung der Daten im Sender,
Fig. 3 zeigt eine Tabelle zur Definition von Symbolen
Fig. 4 zeigt ein QPSK-Zeigerdiagramm,
Fig. 5 zeigt ein Quadratursignalpaar und einen vorteilhaften Abtasttakt,
Fig. 6a und 6b zeigen Signale im Sender ohne und mit Verzögerung, und
Fig. 7a bis 7c zeigen Übergangsdiagramme ohne und mit Verzögerung.

Fig. 8 zeigt als Blockschaltbild einen Sender gemäß der Erfindung.

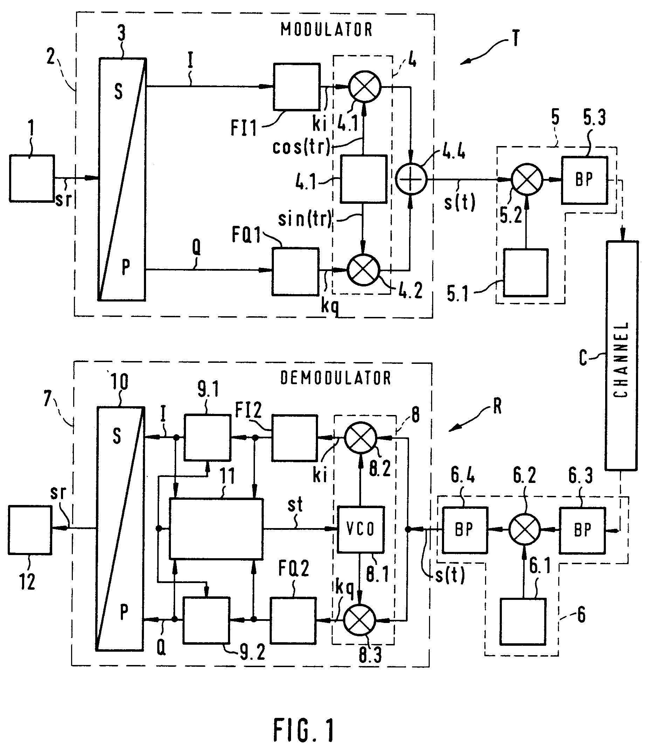

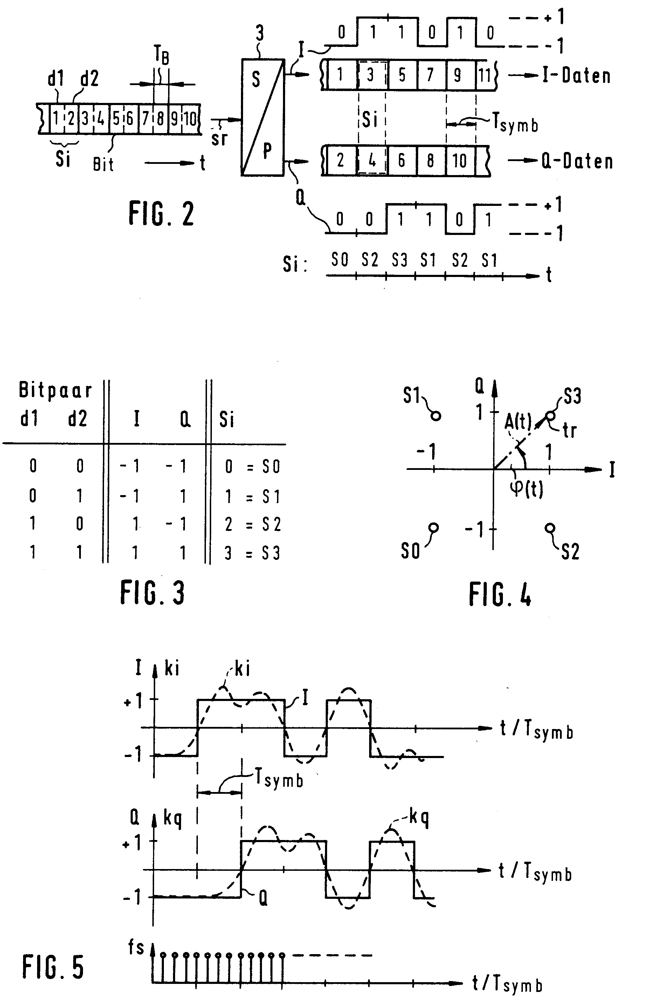

In Fig. 1 ist einem Sender T aus einer Quelle 1 ein digitaler Datenstrom als digitales Signal sr zugeführt. Die für die Quadraturmodulation wesentlichen Teile befinden sich in einem Modulator 2, der einen Seriell/Parallel-Umsetzer 3 enthält, der aus dem digitalen Signal sr ein I- und ein dazu paralleles Q-Signal aus den zugeführten Daten bildet. Zur Bandbegrenzung werden beide Datenströme I, Q jeweils einem Impulsformfilter FI1, FQ1 zugeführt, die danach üblicherweise als eine Inphase- bzw. Quadraturphase-Komponente ki, kq bezeichnet werden und mittels eines Sender-Quadraturmischers 4 einen Quadraturträger tr modulieren. Der Träger tr ist mittels eines sin/cos-Generators 4.1 gebildet, dessen cos- und sin-Komponenten cos(tr), sin(tr) einem ersten bzw. zweiten Mischer 4.2, 4.3 zugeführt sind. Der Träger tr rotiert im Zeigerdiagramm (vergl. Fig. 4) mit der Trägerfrequenz $f_{tr}$ . Die Ausgangssignale der beiden Mischer 4.2, 4.3 sind mittels eines Addierers 4.4 addiert und bilden ein moduliertes Signal s(t), das mit einem ein- oder mehrstufigen Frequenzumsetzer 5 in die Bandlage des Übertragungskanals C gebracht wird. Vom Umsetzer 5 sind der Generator 5.1, der Mischer 5.2 und das ausgangsseitige Bandfilter 5.3 dargestellt. Das modulierte Signal s(t) ist dabei unabhängig von den urspünglichen Daten sr ein kontinuierliches, analoges Signal, das auf dem Übertragungsweg C leider mit Störsignalen und Rauschen überlagert wird. Die Störwirkungen durch Interferenzen und eingekoppeltes Rauschen sind bekanntlich am geringsten, wenn im Sender T und Empfänger R Impulsformfilter verwendet werden, die sowohl dem Rauschanpassungs- als auch dem Nyquistkriterium genügen.

Der Empfänger R ist weitgehend spiegelbildlich zum Sender T aufgebaut. Das empfangene hochfrequente Signal ist mittels eines Frequenzumsetzers 6, der einen Generator 6.1, einen Mischer 6.2 und zwei Bandpässe 6.3, 6.4 enthält, wieder als ein analoges Signal s(t) in ein niederes Frequenzband oder Basisband umgesetzt, wo es in einem Demodulator 7 entweder analog oder digital demoduliert und dekodiert werden kann.

Zunächst wird das analoge Signal s(t) im Demodulator 7 mittels eines Empfänger-Quadraturmischers 8 wieder in seine Inphase- und Quadraturphase-Komponente ki, kq getrennt. Dies kann im Quadraturmischer analog durch Mischung mit einem sin- oder cos-Signal aus einem sin/cos-Generator 8.1 erfolgen. Die Mischer 8.2, 8.3 sind jedoch besonders einfach digital zu realisieren, wenn der Generator 8.1 zu festen Abtastzeitpunkten die Werte +1, 0, -1, 0, +1, 0 usw. als Quadraturträgerwerte abgibt. In beiden Fällen muß der Generator 8.1 starr mit der Bezugsphase des Senders über eine Phasenverriegelungsschleife (= PLL) verkoppelt sein. In jedem Signalpfad folgt dann ein Impulsformfilter FI2 bzw. FQ2 und ein Inphase- bzw. ein Quadraturphas-Detektor 9.1, 9.2. Schließlich wird das I- und Q-Signal mittels eines Parallel/Seriell-Umsetzers 10 wieder zu einem Datenstrom sr zusammengefügt. Die weitere Verarbeitung findet in der Verarbeitungsstufe 12 statt.

Im Demodulator 7 ist ald Teil der PLL eine Taktrückgewinnungseinrichtung 11 vorhanden, die aus dem I- und Q-Signal ein Steuersignal st bildet, das den spannungsgesteuerten Generator 8.1 (= VCO) in der Frequenz und Phase auf die Bezugsphase einrastet. Bei einem digitalen Demodulator liefert die Taktrückgewinnungseinrichtung 11 auch den Abtasttakt fs, dessen Frequenz in der Regel ein ganzzahliges Vielfaches der Symbolfrequenz fsymb ist.

In Fig. 2 ist die Parallelisierung des ursprünglichen Datenstromes sr anhand einer Datenfolge dargestellt. Der Seriell/Parallel-Umsetzer 3 verteilt die ursprüngliche Bitfolge 1,2,3,4,... alternativ als ein I- und Q-Datenstrom, so daß von den ursprünglichen Bitpaaren d1, d2 die ungeradzahligen Bits den I- und die geradzahligen den Q-Datenstrom bilden. Das Bitpaar d1, d2 bildet dabei ein "Symbol" Si, das als solches durch das jeweilige Modulationsverfahren kodiert wird. Ein Bitpaar d1,d2 kann vier verschiedene logische Zustände aufweisen, denen somit vier verschiedene Symbole S0, S1, S2, S3 zukommen, vergleiche die Tabelle Fig. 3. Den Symbolen Si entspicht eine Symbolrate oder Symbolfrequenz fsymb, die wegen der Parallelisierung nur halb so groß ist wie die usrpüngliche Bitrate $f_{Bit}$. Es können auch mehr als zwei ursprüngliche Bits, beispielsweise vier, sechs oder acht, zu einem Symbol zusammengefaßt werden, dann erhöht sich die mögliche Anzahl der Symbole, die Symbolrate wird jedoch noch niedriger. Je niedriger die Symbolrate ist, desto niedriger kann die Verarbeitungsfrequenz im Sender und Empfänger sowie auch die Frequenz des Quadraturträgers gewählt werden.

In Fig. 4 ist ein Zeigerdiagramm für eine QPSK-Modulation dargestellt. Den vier möglichen Symbolen Si sind die vier Quadranten des Einheitskreises zugeordnet. Der Zeiger entspricht dem Träger tr, dessen momentane Rotationsposition im I/Q-Koordinatensystem durch den Winkel phi und die Amplitude A eindeutig definiert ist.

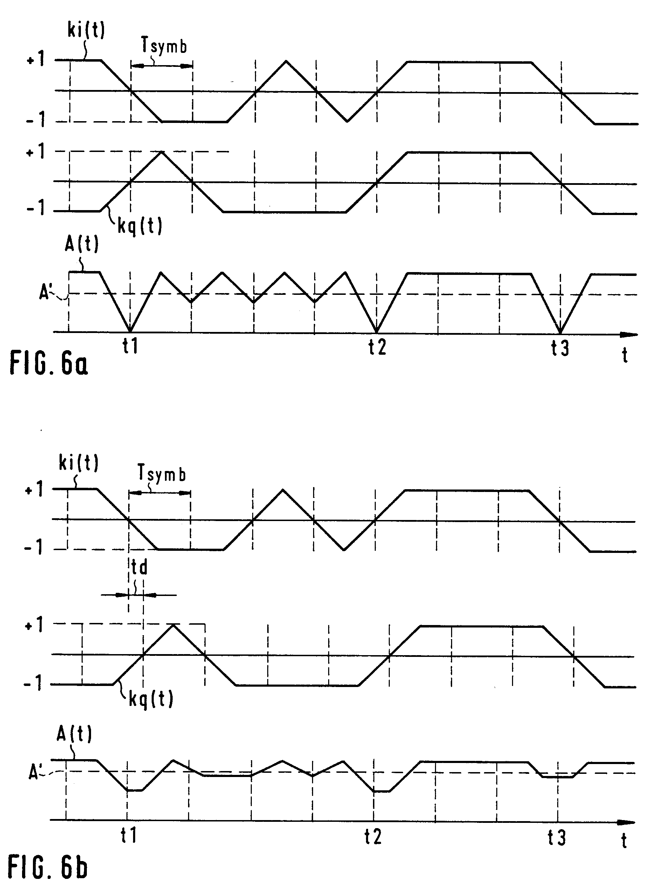

In Fig. 5 ist ein Beispiel für den idealisierten Zeitverlauf des I- und Q-Signals im Sender und Empfänger dargestellt, die entspechend den zugehörigen Symbolen Si theoretisch zwischen den normierten Signalwerten +1 und -1 unendlich steile Impulsflanken aufweisen müßten - das Spektrum wäre dann unendlich lang. Um die erforderliche Bandbreite so weit wie möglich zu reduzieren, werden mittels der bereits genannten Impulsformfilter die Flanken auf vorgegebene Weise verrundet, wodurch aus der Impulsfolge die Inphase- und die Quadraturphase-Komponente ki, kq gebildet werden. Die dargestellten Komponenten ki, kq treten sowohl im Sender als auch etwas modifiziert im Empfänger auf und können dort gegebenenfalls durch einen Abtasttakt fs vor oder nach der Quadraturmischung digitalisiert werden. Wie weit dabei der Abtasttakt in der Frequenz reduziert werden kann, geht aus Fig. 9 hervor.

Fig. 6a zeigt in ganz schematischer Form im Zeitdiagramm die impulsformgefilterten Kompenenten-Signale ki(t), kq(t) im Sender T vor der Quadraturmischung und die daraus resultierende Amplitude A(t). Die Wirkung der Impulsformfilter ist dabei schematisch als eine Verflachung der zwischen den normierten Signalwerten +1 und -1 liegenden Impulsflanken dargestellt, die für die einzelnen Komponenten ki(t), kq(t) dadurch bereits in die Größenordung der Symbolperiode Tsymb kommen. Die tatsächliche Amplitude A(t) ergibt sich als Quadratwurzelwert aus der Summe der beiden Komponenten zum Quadrat:

$$A(t) = SQR( ki(t) \times ki(t) + kq(t) \times kq(t)).$$

Die resultierende Amplitude A(t) ist in Fig. 6a vereinfacht aus einer betragsmäßigen Addition der beiden Komponenten ki(t) und kq(t) bestimmt. Da zu den Zeitpunkten t1, t2, t3 die beiden Komponenten jeweils einen Nulldurchgang aufweisen, sinkt die resultierende Amplitude dort ebenfalls bis auf den Wert Null ab, was nach der Erfindung verhindert werden soll. Andererseits gibt es auch Bereiche, in denen die Amplitude deutlich höher als der resultierende Mittelwert A' ist.

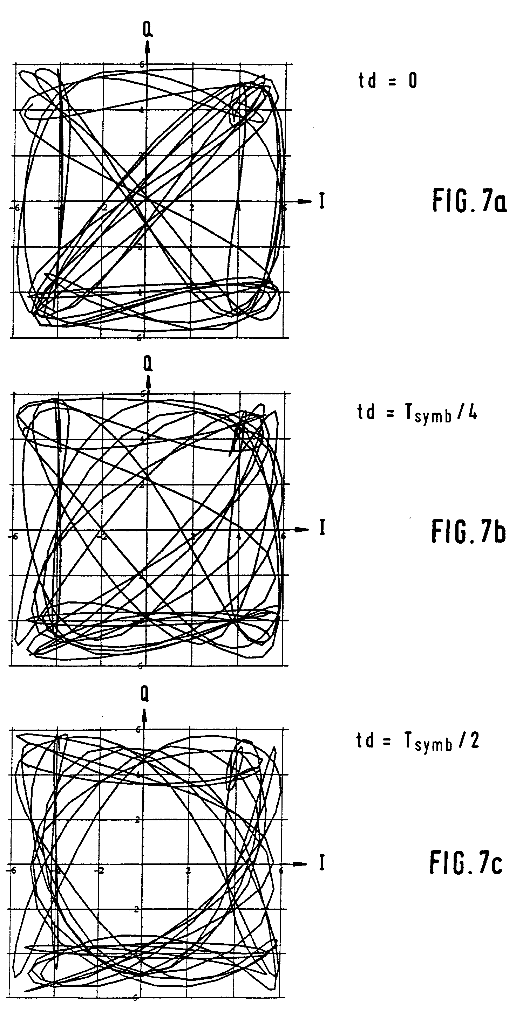

Fig. 6b zeigt auf gleiche schematische Weise, wie sich nach der Erfindung eine Verzögerung einer der beiden Quadratursignal-Komponenten ki(t), kq(t) um das Zeitintervall td vorteilhaft auf die Amplitudenkonstanz A(t) auswirkt. An der grundsätzlichen Signalform der Komponenten hat bis auf die zeitliche Verzögerung der Komponente kq(t) nichts geändert. Aber dadurch fallen die Nulldurchgänge nicht mehr zeitlich zusammen, so daß die resultierende Amplitude A(t) auch nicht mehr auf den Wert Null absinken kann, vergleiche die Zeitpunkte t1, t2 und t3. Ferner ist auch erkennbar, daß die Abweichungen der Amplitude vom zeitlichen Mittelwert A' insgesamt geringer sind. Wenn die Verzögerung noch größer gewählt wird, dann werden die Schwankungen noch geringer. Das Optimum wird etwa bei einer Verzögerung von Tsymb/2 erreicht. Dies zeigen auch die Zeigerdiagramme der Figuren 7a bis 7c. Dort werden die Symbolübergänge mittels einer rechnerischen Simulation einer angenommenen Impulsfolge simuliert, wobei

in Fig. 7a keine Verzögerung,
in Fig. 7b eine Verzögerung von Tsymb/4 und
in Fig. 7c eine Verzögerung von Tsymb/2 dargestellt ist.

Auf der Empfängerseite kann diese Verzögerung durch eine entspechende Verzögerung der anderen Quadratursignal-Komponente ki(t) bzw. kq(t) (im Beispiel die Komponente ki(t)) wieder rückgängig gemacht werden, wodurch die bereits vorhandene analoge oder digitale Signalverarbeitung nicht verändert werden muß.

Bei einer Verzögerung im Sender von td = Tsymb/4 ergeben sich jedoch für die Empfängerseite ganz überraschende Vereinfachungen, wenn der Empfänger im Demodulatorteil mittels einer digitalen Signalverarbeitungsschaltung realisiert ist. Dies ist Gegenstand einer Patentanmeldung (ITT-Case: C-DIT 1716) mit gleichem Zeitrang.

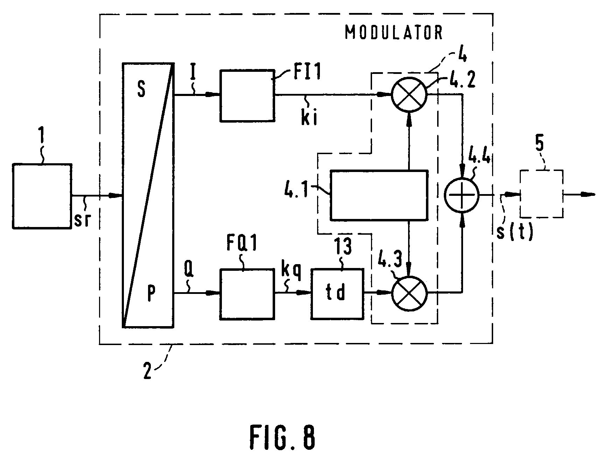

Fig. 8 zeigt schließlich als Blockschaltbild einen Sender T gemäß der Erfindung, der im Quadratursignalzweig zwischen dem Seriell/Parallel-Umsetzer 3 und dem Quadraturmischer 4 eine Verzögerungseinrichtung 13 enthält, mit der die Quadraturphase-Komponente kq um ein Zeitintervall td, insbesondere um Tsymb/4 verzögert wird. Eine ausführliche Beschreibung der Schaltung erübrigt sich, da der Sender T gemäß der Erfindung bis auf die Verzögerungseinrichtung 13 sowohl in der Schaltung als auch der Funktionsweise identisch zum ausführlich beschiebenen Sender T der Fig. 1 ist. Da identische Funktionseinheiten wie üblich mit den gleichen Bezugszeichen versehen sind, wird auf die dortige Beschreibung verwiesen.

## Patentansprüche

1. Übertragungssystem für ein digitales Signal (sr), das in Symbole (Si) kodiert mittels einer Quadraturmodulation von einem Sender (T) in beliebiger Frequenzlage auf einen Empfänger (R) übertragen ist, dadurch gekennzeichnet, daß eine der beiden Quadratursignal-Komponenten (ki, kq) im Sender vor der Quadraturmodulation um ein Zeitintervall (td) verzögert ist.

2. Übertragungssystem nach Anspruch 1, dadurch gekennzeichnet, daß senderseitig ein erstes Inphase- und ein erstes Quadraturphase-Filter (FI1, FQ1) jeweils als Impulsformfilter im Signalpfad der Quadratursignal-Komponenten (ki, kq) liegen, die mit einem zugehörigen zweiten Inphase- bzw. Quadraturphase-Filter (FI2, FQ2) im Empfänger (R) zusammenwirken, die insbesondere digital mittels einer IIR-Filterstruktur realisiert sind.

3. Übertragungssystem nach Anspruch 1 oder 2, dadurch gekennzeichnet, daß das Zeitintervall (td) der Verzögerung im Sender (T), insbesondere ein Viertel der Symbolperiode Tsymb beträgt.

4. Sender(T) für ein Übertragungsystem gemäß einem der Ansprüche 1 bis 3, der ein digitales Signal (sr) überträgt, das in Symbole (Si) kodiert mittels einer Quadraturmodulation von dem Sender (T) in beliebiger Frequenzlage auf einen Empfänger (R) übertragen ist, dadurch gekennzeichnet, daß eine der beiden Quadratursignal-Komponenten (ki, kq) vor der Quadraturmodulation mittels einer Verzögerungseinrichtung (13) um ein Zeitintervall (td) verzögert ist.

**5.** Sender (T) nach Anspruch 4, dadurch gekennzeichnet, daß das Zeitintervall (td) insbesondere ein Viertel der Symbolperiode Tsymb beträgt.

**6.** Sender (R) für ein Übertragungssystem gemäß Anspruch 4 oder 5, mit

- einem Seriell/Parallel-Umsetzer (), der aus dem mit einer Bitrate $f_B$ verknüpften digitalen Signal (sr), das von einer Datenquelle () geliefert ist, einen I- und einen Q-Datenstrom (I, Q) bildet,

- einem jeweils als Impulsformfilter dienenden ersten Inphase- und ersten Quadraturphase-Filter (FI1, FQ1), um den I- und Q-Datenstrom (I, Q) in der Bandbreite zu begrenzen, wodurch eine Inphase- und eine Quadraturphase-Komponente (ki, kq) entstehen, die mittels eines Sender-Quadraturmischers () einen Quadraturträger (tr) modulieren, und

- einer Verzögerungseinrichtung (), die vor dem Sender-Quadraturmischer () entweder die Inphase- oder die Quadraturphase-Komponente (ki, kq) um das Zeitintervall (td) verzögert, das einem ganzzahligen Teil 1/N der Symbolperiode $T_{symb}$ gleich ist.

**7.** Sender (T) nach Anspruch 6, dadurch gekennzeichnet, daß
die Übertragungsfunktion hr(t) des ersten Inphase- und ersten Quadratrurphase-Filters (FI1, FQ1) aus dem Zusammenwirken eines zugehörigen zweiten Inphase- und zweiten Quadraturphase-Filters (FI2, FQ2) im Empfänger (R) bestimmt ist, die digital mittels einer IIR-Filterstruktur realisiert sind und die Kombination aus dem ersten und zweiten Inphase-Filter (FI1, FI2) und die Kombination aus dem ersten und zweiten Quadraturphase-Filter (FQ1, FQ2) hat jeweils eine Übertragungsfunktion $Hg(z) = Ht(z) \times Hr(z)$, die sowohl das Nyquistkriterium $Hg(z) + Hr(-z^*) = 1$ als auch das Rauschanpassungskriterium $Ht(z) = Hr(z^*)$ erfüllt.

**8.** Sender (T) nach Anspruch 7, dadurch gekennzeichnet, daß das zweite Inphase-Filter (FI2) und das zweite Quadraturphase-Filter (FQ2) jeweils einen ersten und zweiten Allpaß (A1, A2) enthalten, wobei die Übertragungsfunktion $H_i(z)$ durch die Beziehung

$$H_i(z) = A_i(z) = (a_m + a_{m-1} \times z^{-1} + \ldots + z^{-m}) / (1 + a_1 \times z^{-1} + \ldots + a_m \times z^{-m})$$

und die Übertragungsfunktion Hr(z) des zweiten Inphase-Filters (FI2) und des zweiten Quadraturphase-Filters (FQ2) durch folgende Beziehungen definiert sind:

$$Hr(z) = (A_1(z^*) + z^{-1} \times A_2(z^2)) / 2.$$

**9.** Sender (T) nach einem der Ansprüche 4 bis 7, dadurch gekennzeichnet, daß die Übertragungsfunktion $H_t(z)$ des ersten Inphase-Filters (FI1) bzw. Quadaraturphase-Filters (FQ2), insbesondere über die Symmetriebedingung des Rauschanpassungs-Kriteriums $H_t(z) = H_r(z^*)$ bezüglich der Impulsantwort $h_t(t)$, $h_r(t)$ des ersten und zweiten Inphase-Filters (FI1, FI2) bzw. des ersten und zweiten Quadraturphase-Filters (FQ1, FQ2), aus der Übertragungsfunktion $H_r(z)$ des zweiten Inphase-Filters (FI2) bzw. Quadraturphase-Filters (FQ2), bestimmt ist und die resultierende Impulsantwort $h_t(z)$ des ersten Inphase-Filters (FI1) bzw. Quadraturphase-Filters (FQ1) durch die FIR-Struktur beliebig genau angenähert ist.

**10.** Filterkombination (FI1, FI2; FQ1, FQ2) für ein Übertragungssystem gemäß einem der Ansprüche 1 bis 3 oder für einen Sender (T) gemäß einem der Ansprüche 4 bis 9,
<u>gekennzeichnet durch folgende Merkmale:</u>

- die Filterkombination weist auf der Senderseite ein erstes Inphase-Filter (FI1) und ein erstes Quadraturphase-Filter (FQ1), jeweils mit einer FIR-Filterstruktur, und auf der Empfängerseite ein zweites Inphase-Filter (FI2) und ein zweites Quadraturphase-Filter (FQ2), jeweils mit einer IIR-Struktur, auf,

- das zweite Inphase-Filter (FI2) bzw. Quadratruphase-Filter (FQ2) ist entsprechend der folgenden Übertragungsfunktion

$$H_r(z) = (A_1(z^*) + z^{-1} \times A_2(z^2)) / 2$$

mit einem $z^{-1}$-Verzögerer (v1) und einem ersten und zweiten Allpaß (A1, A2) dimensioniert, deren jeweilige Übertragungsfunktion $A_i(z)$ durch folgende Beziehung definiert ist:

$$H_{Allpa\beta l}(z) = A_i(z) = (a_m + a_{m-1} \times z^{-1} + ... + z^{-m}) / (1 + a_1 \times z^{-1} + ... + a_m \times z^{-m}),$$

- über die Impulsantwort $h_r(t)$ des zweiten Inphase-Filters (FI2) bzw. Quadraturphase-Filters (Q2) ist entsprechend dem Rauschanpassungs-Kriterium $H_t(z) = H_r(z^*)$ eine zeitlich gespiegelte Impulsantwort $h_r'(-t)$ gebildet, wobei die Impulsantwort $h_r(t)$ im Bereich geringfügiger, insbesondere auslaufender, Restschwingungen zuvor zeitlich begrenzt ist, und

- aus der zeitlich gespiegelten und zeitlich begrenzeten Impulsantwort $h_r'(-t) = h_t(t)$ sind die Filterkoeffizienten $(a_0$ bis $a_n)$ eines FIR-Filters bestimmt, das in der Filterkombination (F1, F2) als erstes Inphasen-Filter (FI1) bzw. Quadraturphase-Filter (FQ1) dient.

FIG. 1

FIG. 2

FIG. 3

| Bitpaar | | | | | |
|---|---|---|---|---|---|
| d1 | d2 | I | Q | Si | |
| 0 | 0 | -1 | -1 | 0 | = S0 |
| 0 | 1 | -1 | 1 | 1 | = S1 |
| 1 | 0 | 1 | -1 | 2 | = S2 |
| 1 | 1 | 1 | 1 | 3 | = S3 |

FIG. 4

FIG. 5

FIG. 6a

FIG. 6b

FIG.7a — td = 0

FIG.7b — td = $T_{symb}/4$

FIG.7c — td = $T_{symb}/2$

FIG. 8

**Europäisches Patentamt**

## EUROPÄISCHER RECHERCHENBERICHT

Nummer der Anmeldung

EP 96 10 3814

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | WO-A-86 03356 (DEVON COUNTY COUNCIL ;TOMLINSON; BRAMWELL ) 5.Juni 1986 * Abbildungen 12,14 * * Seite 34, Zeile 23 - Zeile 30 * * Seite 2, Zeile 23 - Zeile 26 * * Seite 35, Zeile 2 - Zeile 3 * * Seite 25, Zeile 27 - Seite 26, Zeile 10; Abbildung 6 * | 1-10 | H04L27/20 |
| X | US-A-4 528 526 (MCBILES) 9.Juli 1985 * Zusammenfassung; Abbildungen 2,6 * | 1,4 | |
| A | | 2,3,5-10 | |
| X | IEEE TRANSACTIONS ON COMMUNICATIONS, Bd. 30, Nr. 1, Januar 1982, NEW YORK  US, Seiten 275-283, XP002012987 LE-NGOC T ET AL.:  "New modulation techniques for low-cost power and bandwidth efficient satellite earth stations" * Seite 275, rechte Spalte, Absatz 4 - Absatz 6 * * Abbildung 1 * | 1,4 | |
| | | | **RECHERCHIERTE SACHGEBIETE (Int.Cl.6)** H04L |
| A | | 2,3,5-10 | |

Der vorliegende Recherchenbericht wurde für alle Patentansprüche erstellt

| Recherchenort | Abschlußdatum der Recherche | Prüfer |
|---|---|---|
| DEN HAAG | 10.September 1996 | Scriven, P |